# EUROPEAN PATENT APPLICATION

(11) **EP 4 769 603 A1**
(43) Date of publication of application: **01.07.2026**
(21) Application number: 25861028.6
(22) Date of filing: 18.06.2025
(51) Int. Cl.: H01M 10/04, H01M 10/44, H01M 4/04

(54) **BATTERY CELL AGING DEVICE**

(30) Priority: 02.09.2024 KR 20240118522
(71) Applicant: LG ENERGY SOLUTION, LTD., Seoul 07335 (KR)
(72) Inventor: HAN, Sangyub, Daejeon 34122 (KR)
(74) Representative: Goddar, Heinz J.
(86) International application number: PCT/KR2025/008400
(87) International publication number: WO 2026/049230

(57) **Abstract**

The present invention relates to a battery cell aging device including a main body having a hollow portion formed therein for housing a battery cell; a heater that is positioned on an inner surface of or inside the main body and adjusts a temperature of the battery cell; and a sensor that measures the temperature of the battery cell while being in contact with a portion of the battery cell.

## Description

### [Technical Field]

This application claims priority to and the benefit of Korean Patent Application No. 10-2024-0118522 filed in the Korean Intellectual Property Office on September 2, 2024, the entire contents of which are incorporated herein by reference.

The present invention relates to a battery cell aging device.

### [Background Art]

In recent years, secondary batteries capable of charging and discharging have been widely used as energy sources for wireless mobile devices. In addition, secondary batteries are also attracting attention as energy sources for electric vehicles, hybrid electric vehicles, and the like, which have been proposed as solutions to air pollution caused by conventional gasoline and diesel vehicles that use fossil fuels. Accordingly, the applications of secondary batteries are becoming increasingly diverse due to the advantages of secondary batteries, and it is expected that secondary batteries will be applied to more fields and products in the future than at present.

Such secondary batteries are classified into lithium-ion batteries, lithium-ion polymer batteries, lithium polymer batteries, and the like depending on the compositions of electrodes and an electrolyte solution. Among them, the use of lithium-ion polymer batteries is increasing due to their low likelihood of electrolyte solution leakage and ease of manufacture. In general, secondary batteries are classified, depending on the shape of the battery case, into cylindrical and prismatic batteries in which the electrode assembly is housed in a cylindrical or prismatic metal can, and pouch-type batteries in which the electrode assembly is housed in a pouch-type case made of aluminum laminated sheets. The electrode assembly housed in the battery case is a power generation element capable of charging and discharging and having a structure including a positive electrode, a negative electrode, and a separator interposed between the positive electrode and the negative electrode, and is classified into a jelly-roll type in which a separator is interposed between long sheet-like positive and negative electrodes coated with active materials, and the resultant laminate is wound, and a stack type in which a plurality of positive electrodes and negative electrodes, each having a predetermined size, are sequentially stacked with separators interposed therebetween.

In general, such secondary batteries undergo an activation process after the electrolyte solution is injected. During the activation process, the battery cell is caused to form an SEI film through initial charging, and then to rapidly elute metal foreign matter through high-temperature aging, thereby preventing the occurrence of low-voltage defects.

The high-temperature aging is generally performed at a temperature of 60°C or higher, and therefore, the operation needs to be performed in an environment where a constant temperature is maintained. However, in the related art, trays loaded with a plurality of battery cells are placed on top of each other, and then temperature adjustment is performed using a general thermometer.

However, in such cases, among the battery cells in the high-temperature aging room, battery cells located at the center of the tray have more difficulty in thermal circulation than those at the outer edges, resulting in an excessive increase in temperature. In this case, there is a problem in that the capacities of the battery cells located at the center are reduced due to an irreversible reaction.

### [Detailed Description of the Invention]

### [Technical Problem]

In view of the problems of the related art described above, the present invention is intended to provide a battery cell aging device that minimizes temperature differences among battery cells by adjusting a temperature of each battery cell and increases energy efficiency by adjusting the temperature of each battery cell.

### [Technical Solution]

An exemplary embodiment of the present invention provides a battery cell aging device including a main body having a hollow portion formed therein for housing a battery cell; a heater positioned on an inner surface of or inside the main body and configured to adjust a temperature of the battery cell; and a sensor configured to measure the temperature of the battery cell while being in contact with one side of the battery cell.

### [Advantageous Effects]

A battery cell aging device according to an exemplary embodiment of the present invention has the effect of minimizing temperature differences among battery cells by adjusting the temperature of each battery cell and increasing energy efficiency by adjusting the temperature of each battery cell.

### [Brief Description of Drawings]

FIG. 1 is a perspective view illustrating a battery cell aging device according to an exemplary embodiment of the present invention.
FIG. 2 is a perspective view illustrating an aspect in which a battery cell is being housed in a hollow portion of a main body according to an exemplary embodiment of the present invention.
FIG. 3(a) is a transparent view illustrating a main body according to an exemplary embodiment of the present invention, and FIG. 3(b) is a transparent view illustrating a main body according to another exemplary embodiment of the present invention.
FIG. 4 is a bottom view illustrating a main body according to an exemplary embodiment of the present invention.

### <Explanation of Reference Numerals and Symbols>

1: battery cell
10: main body
11: hollow portion
20: heater
30: sensor
40: tray
100: battery cell aging device

### [Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be presented and described in detail in the detailed description. However, this is not intended to limit the scope of the invention to the exemplary embodiments, and it should be understood that all modifications, equivalents, or substitutes that fall within the spirit and technical scope of the present invention are encompassed thereby.

Hereinafter, the present invention will be described in detail with reference to the drawings. However, it should be noted that the drawings are provided for illustrating the present invention, and the scope of the present invention is not limited by the drawings.

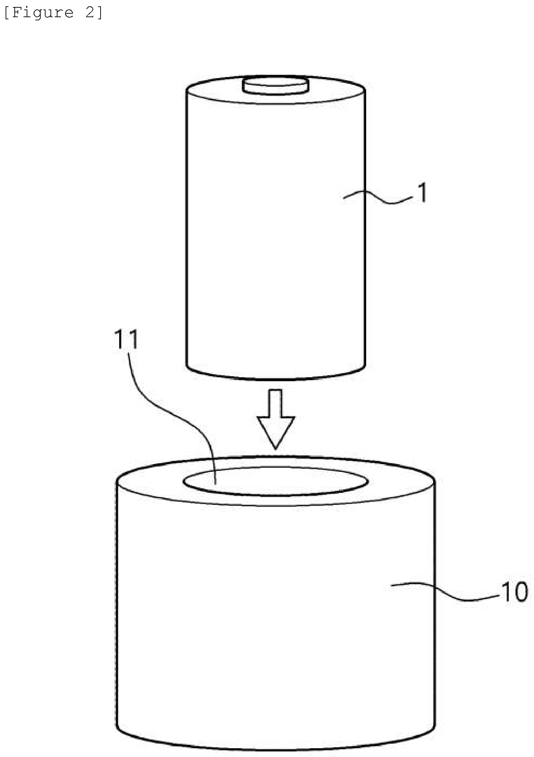

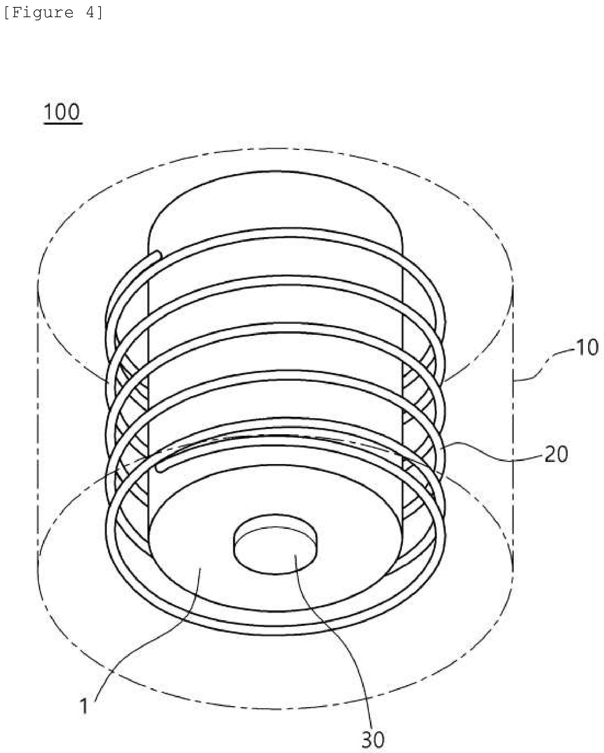

FIG. 2 is a perspective view illustrating an aspect in which a battery cell 1 is being housed in a hollow portion 11 of a main body according to an exemplary embodiment of the present invention, and FIG. 4 is a bottom view illustrating a battery cell aging device 100 according to an exemplary embodiment of the present invention.

The battery cell aging device 100 includes a main body 10, a heater 20, and a sensor 30.

The main body 10 is configured to house, fix, and support a battery cell, and has a hollow portion 11 in which the battery cell is housed. Specifically, the main body 10 may be provided in the form of a column. For example, the main body 10 may be provided in the form of a cylindrical column or a polygonal column. The hollow portion 11 may be provided along a longitudinal direction of the main body 10. The hollow portion 11 may be provided in the same form as the battery cell, and preferably in the form of a circular column.

The main body 10 may prevent heat in the hollow portion 11 from escaping to the outside, and may prevent external current from flowing through the battery cell. Therefore, the main body 10 may include a non-conductive material. Specifically, the main body 10 may not conduct at least one of electricity, vibration, and shock, but may conduct heat.

If the main body 10 is electrically conductive, a short circuit may occur in the secondary battery 1 due to external current, and if the main body 10 is conductive to vibration and impact, there may be a problem in which the secondary battery 1 is damaged due to vibration and impact.

The heater 20 may increase the temperature of a battery cell by applying heat to the battery cell so as to age the battery cell at high temperatures. The heater 20 may be located on an inner surface of the main body 10 and may apply heat to the battery cell.

The heater 20 may include an electric resistance heater. The electric resistance heater is a heater that converts electric current into heat. The heater 20 may be a wire type having a diameter.

The heater 20 may be provided to protrude from the inner surface of the main body 10. For example, a portion of the heater 20 may be bonded to the inner surface of the main body 10 and may protrude from the inner surface by the diameter of the heater 20.

Alternatively, the heater 20 may be provided exposed on the inner surface of the main body 10. For example, a groove having the same shape as the heater 20 and a depth equal to the diameter of the heater 20 may be formed in the inner surface of the main body 10, and the heater 20 may be housed in the groove and exposed toward the hollow portion 11. In other words, the heater 20 may not protrude from the inner surface of the main body 10 toward the center of the main body 10, and the exposed surface of the heater 20 may be flush with the inner surface of the main body 10.

Alternatively, the heater 20 may be positioned inside the main body 10. For example, the heater 20 may be surrounded by the main body 10 without protruding toward or being exposed to the hollow portion 11. In this case, the heater 20 may be positioned adjacent to the hollow portion 11 so as to efficiently conduct heat to the secondary battery 1. A thickness between the heater 20 and an outer surface of the main body 10 may be smaller than a thickness of the main body 10 between the heater 20 and the hollow portion 11.

A maximum width of the hollow portion 11 of the main body according to an exemplary embodiment of the present invention may be equal to or greater than a maximum width of the battery cell. In this case, the maximum width refers to a distance between two opposing end portions of a plane perpendicular to the axes of the battery cell 1 and the main body 10. Therefore, when the battery cell 1 is provided in the form of a circular column, the maximum width of the battery cell may be the diameter of the battery cell.

For example, when the heater 20 is exposed on the inner surface of the main body 10 and the maximum width of the hollow portion 11 is equal to the maximum width of the battery cell, the side surface of the battery cell and the heater 20 may come into contact with each other, so that the heater 20 may directly supply heat to the battery cell.

Alternatively, when the heater 20 is exposed on the inner surface of the main body 10 and the maximum width of the hollow portion 11 is greater than the maximum width of the battery cell, the side surface of the battery cell and the heater 20 are spaced apart from each other, so that the battery cell may be indirectly heated by heat emitted from the heater 20.

When the heater 20 protrudes from the inner surface of the main body 10 toward the hollow portion 11, the maximum width of the hollow portion 11 may be greater than the maximum width of the battery cell. For example, when the maximum width of the hollow portion 11 is Rh, the maximum width of the battery cell is Rc, and the diameter of the heater 20 is r, Rh≥Rc+2r may be satisfied.

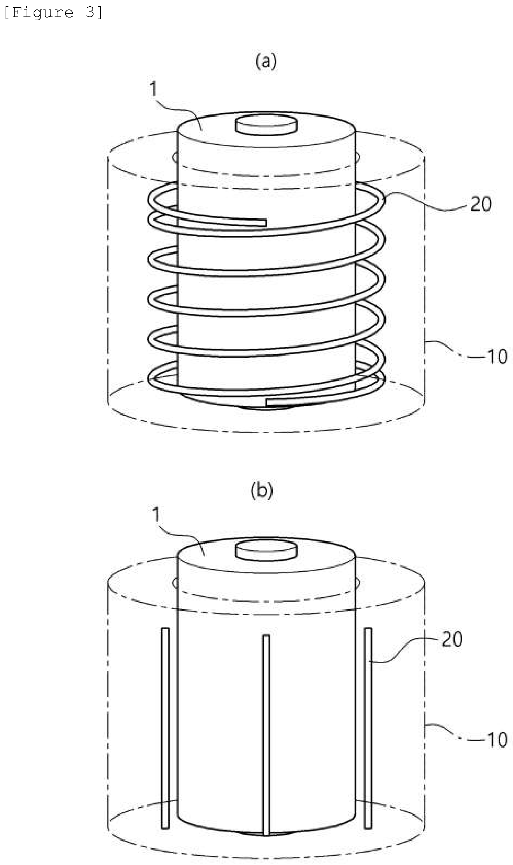

FIG. 3(a) is a transparent view illustrating the main body 10 according to an exemplary embodiment of the present invention, and FIG. 3(b) is a transparent view illustrating the main body 10 according to another exemplary embodiment of the present invention.

Referring to FIG. 3(a), the shape of the heater 20 is not particularly limited as long as it can heat the entire side surface of the battery cell, but preferably, the heater 20 may be provided in a spiral shape.

That is, the heater 20 may be provided in a spiral shape along the inner surface of the main body 10 and may surround the entire side surface of the battery cell.

Alternatively, referring to FIG. 3(b), the heater 20 may be provided in a straight-line form. That is, since the wire-type heater 20 is provided in a straight-line form, the heater 20 may be provided in the form of a column and may have a length and a diameter (or width). The heater 20 may be positioned on the inner surface of the main body 10, and the length of the heater 20 may extend along the length of the main body 10. The length of the heater 20 may be equal to or less than the length of the main body 10.

The straight-type heater 20 may be provided in plurality. The plurality of heaters 20 may be positioned spaced apart along an inner circumference of the main body 10.

Since the heaters 20 are positioned on the side surface of the battery cell in the longitudinal direction of the battery cell, the entire battery cell may be heated to the same or similar temperature, thereby reducing the problem of temperature deviation. This can reduce the risk of defective products caused by the aging process.

Here, the side surface of the battery cell refers to a surface extending along the axial direction of the battery cell and connecting two opposing sides.

For example, the battery cell may include a case provided in the form of a column and having at least one open side and a space formed therein for housing an electrode assembly and an electrolyte solution, and a cap assembly coupled to the open side. In this case, the battery cell may include one side to which the cap assembly is coupled, the other side opposing the one side, and a side surface connecting the one side and the other side.

The sensor 30 serves to measure a temperature of the battery cell, and may measure the temperature of the battery cell while being in contact with a portion of the battery cell. Preferably, the sensor 30 may be in contact with at least one of the two opposite sides of the battery cell, and more preferably, may be in contact with the other side, other than one side on which the cap assembly is positioned.

In an exemplary embodiment, the sensor 30 may protrude from an edge of a lower surface of the main body 10 in the direction in which the hollow portion 11 is formed. The sensor 30 may include a measurement unit that measures the temperature of the battery cell while being in contact with the battery cell, and a connection portion that protrudes from a portion of the measurement unit and supplies power.

The measurement unit may be located in the hollow portion 11 and may come into contact with the other side of the battery cell. The connection portion may extend from the measurement unit toward an edge of the main body 10 and may be connected to a power source. The connection portion may be fixed to the lower surface of the main body 10.

The battery cell aging device 100 according to an exemplary embodiment of the present invention may further include a control unit (not illustrated). The control unit may adjust a temperature of the heater 20 and control a cooling unit described below.

An aging temperature may be set in the control unit, and the control unit may control the heater 20 based on the set temperature. For example, when the aging temperature is set to 60°C in the control unit, power supply to the heater 20 may be controlled so that the heater 20 maintains a temperature of 60°C.

Specifically, the heater 20 may increase the temperature of the battery cell to 60°C, and when the heater 20 is operated, the sensor 30 may measure the temperature of the battery cell. The sensor 30 transmits temperature data of the battery cell to the control unit, and the control unit stops the power supplied to the heater 20 when the temperature of the battery cell exceeds 60°C.

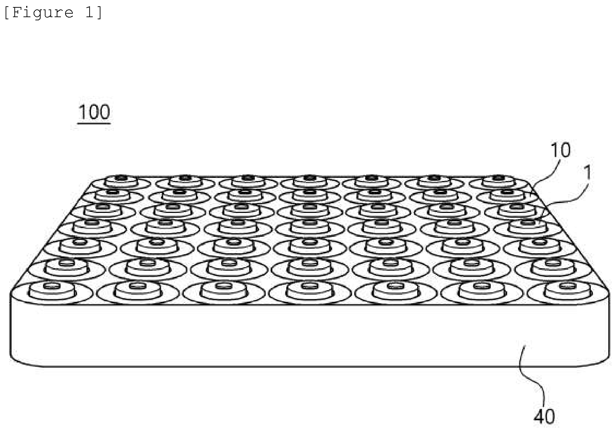

FIG. 1 is a perspective view illustrating the battery cell aging device 100 according to an exemplary embodiment of the present invention.

The battery cell aging device 100 according to an exemplary embodiment of the present invention may further include a tray 40. The tray 40 may be provided with a plurality of grooves (not illustrated) in which the main bodies 10 can be housed. The battery cell aging device 100 can age a plurality of battery cells simultaneously by the tray 40. Since each battery cell is introduced into the hollow portion 11 of the main body and the heater 20 is included in each main body 10, the plurality of battery cells can be heated to the same temperature at all positions on the tray 40, so that the temperature differences among the battery cells depending on their positions on the tray 40 can be minimized.

The tray 40 according to an exemplary embodiment of the present invention may be provided in the same form as a production tray used in battery cell production. Accordingly, when battery cell production is completed, a gripper capable of moving a plurality of battery cells simultaneously can grip and move a plurality of battery cells to the tray 40, thereby saving time in moving the battery cells.

The tray 40 may be made of a heat insulating material, thereby preventing heat inside the main body 10 from being radiated to the outside, which would otherwise lead to energy loss.

The tray 40 and the main body 10 may be made of the same material or different materials. Preferably, the tray 40 and the main body 10 may be made of the same material that is non-conductive to both electricity and heat, so that the battery cell aging device 100 according to an exemplary embodiment of the present invention may have a double heat insulation structure. Therefore, the heat emitted from each heater 20 can be prevented from increasing the temperatures of adjacent battery cells.

When the tray 40 and the main body 10 are made of different materials, for example, the main body 10 may be made of a material that is electrically non-conductive but thermally conductive, and the tray 40 may be made of a heat-blocking material. In this case, the tray 40 can prevent each main body 10 from being heated by the heater 20 included in the adjacent main body 10.

The main body 10 can be separated from the tray 40. Accordingly, the main body 10 introduced into the tray 40 can be individually replaced. In the event of a failure of the heater 20 and sensor 30, only the main body 10 to which the broken heater 20 and the sensor 30 are coupled can be separated from the tray 40 and replaced, instead of replacing the entire tray 40, which may result in an advantageous economic effect.

The battery cell aging device 100 according to another exemplary embodiment of the present invention may further include a cooling unit (not illustrated). The cooling unit serves to discharge the heat inside the hollow portion 11 of the main body to the outside. For example, when the temperature of the battery cell exceeds the aging temperature, the control unit may cut off the power supply to the heater 20 to adjust the temperature of the battery cell so that the temperature does not increase any further. However, in the battery cell aging device 100, due to the heat insulation of the main body 10 and the tray 40, the temperature inside the hollow portion 11 may not decrease but be maintained, or the temperature of the battery cell may increase after the power supply is cut off due to the accumulated heat.

Accordingly, the cooling unit can prevent the increase in the temperature of the battery cell by discharging the heat of the hollow portion 11 to the outside, and can reduce the temperature of the battery cell and the temperature inside the hollow portion 11 in a short period of time.

The cooling unit is not particularly limited as long as it can reduce the temperature of the battery cell and the temperature inside the hollow portion 11, but may have a fan or a structure in which cooling water flows.

In an exemplary embodiment, the cooling unit may be provided in the form of a tube through which cooling water flows. The cooling unit may be positioned on the inner surface of the main body 10 and may be provided in the same shape as the heater 20. For example, when the cooling unit and the heater 20 are provided in a spiral shape, the cooling unit may be positioned alternately with the heater 20 in the longitudinal direction of the main body 10 on the inner surface of the main body 10.

Alternatively, when the cooling unit and the heater 20 are provided in a straight-line form, the cooling unit may be positioned alternately with the heater 20 in the circumferential direction of the main body 10 on the inner surface of the main body 10.

Alternatively, the cooling unit may be provided in a wave shape, and in this case, the cooling unit and the heater 20 may be alternately positioned in the circumferential direction of the main body 10 on the inner surface of the main body 10.

In another exemplary embodiment, the cooling unit may be provided in the form of a fan. The cooling unit may be provided in a form in which a fan is positioned at the center of a body having the same area as one surface of the tray 40. The cooling unit may be positioned on the lower surface of the tray 40.

Alternatively, the cooling unit may further include protrusions at the four corners of the body and may be positioned on the upper surface of the tray 40, such that the cooling unit may be positioned spaced apart from the tray 40 by the height of the protrusions.

Although the present invention has been described with reference to preferred exemplary embodiments, it will be understood by one skilled in the art that various modifications and variations can be made to the present invention without departing from the technical spirit and scope of the present invention.

## Claims

1. A battery cell aging device comprising:
a main body having a hollow portion formed therein for housing a battery cell;
a heater positioned on an inner surface of or inside the main body and configured to adjust a temperature of the battery cell; and
a sensor configured to measure the temperature of the battery cell while being in contact with a portion of the battery cell.

2. The battery cell aging device of claim 1, further comprising a tray having a plurality of grooves in each of which the main body is housed.

3. The battery cell aging device of claim 2, wherein the tray comprises a heat insulating material.

4. The battery cell aging device of claim 1, wherein the main body is made of a non-conductive material.

5. The battery cell aging device of claim 1, wherein a maximum width of the battery cell is smaller than a maximum width of the hollow portion of the main body.

6. The battery cell aging device of claim 1, wherein the sensor is in contact with at least one of two opposing sides of the battery cell.

7. The battery cell aging device of claim 1, wherein the heater is provided in a spiral shape on the inner surface of the main body.

8. The battery cell aging device of claim 1, wherein the heater is provided in a straight-line form in a longitudinal direction of the main body on the inner surface of the main body, and is provided in plurality along a circumference of the inner surface of the main body.

9. The battery cell aging device of claim 1, wherein the heater is an electric resistance heater.

10. The battery cell aging device of claim 1, further comprising a cooling unit configured to cool the battery cell or to discharge heat inside the hollow portion of the main body to an outside.
